# EUROPÄISCHE PATENTSCHRIFT

(11) **EP 2 658 180 B1**
(45) Veröffentlichungstag und Bekanntmachung des Hinweises auf die Patenterteilung: **25.05.2016**
(21) Anmeldenummer: 13001681.9
(22) Anmeldetag: 03.04.2013
(51) Int. Cl.: H04L 12/28, E04F 19/08, H02G 3/12

(54) **Unterputz-Elektro-Installationsgeräte-Baukastensystem**
Built-in electrical installation device construction kit system
Système modulaire d'appareils d'installation électriques encastrés

(30) Priorität: 26.04.2012 DE 102012008459
(43) Veröffentlichungstag der Anmeldung: 30.10.2013
(73) Patentinhaber: ABB AG, 68309 Mannheim (DE)
(72) Erfinder: Kruppa, Christian, 44651 Herne (DE); Krummel, Holger, 58515 Lüdenscheid (DE); Zierach, Falk, 58513 Lüdenscheid (DE)

(56) Entgegenhaltungen:
- EP-A2- 2 312 713
- DE-U1-202007 005 026
- US-A1- 2005 125 083
- US-A1- 2010 201 515
- US-A1- 2011 264 286

## Beschreibung

Die Erfindung betrifft ein Unterputz-Elektro-Installationsgeräte-Baukastensystem, mit welchem Elektro-Installationsgeräte unterschiedlicher Funktionen geschaffen werden können.

Aus der EP 1 956 754 B1 ist ein Bediengerät der Gebäudesystemtechnik mit mindestens einem Bedienelement bekannt, welchem wahlweise unterschiedliche Funktionen zuordenbar sind und welches eine dem Bedienelement zugeordnete LED-Leuchtanzeige aufweist, wobei die LED-Leuchtanzeige mittels einer LED-Ansteuereinheit in Abhängigkeit der dem Bedienelement konkret zugeordneten Funktion in der Weise ansteuerbar ist, dass einer bestimmten Funktion eine bestimmte Farbe der LED-Leuchtanzeige zugeordnet ist. Zusätzlich ist ein Farbdisplay mit unterschiedlichen, den einzelnen Funktionen zugeordneten und in Abhängigkeit der konkret ausgewählten Funktion aktivierten oder deaktivierten Bildschirm-Symbolen vorgesehen ist, welchen jeweils eine mittels einer Farbdisplay-Ansteuereinheit ansteuerbaren Farbdisplay-Leuchtanzeige zugeordnet ist, deren Farbe der Farbe der LED-Leuchtanzeige entspricht.

Aus der US 2011/264286 A1 ist ein Steuergerät mit einer als Touchscreen ausgeführten Bedieneinheit bekannt, die einen erstem Bereich zur Darstellung, Aktivierung und Statusanzeige einer hinterlegten Gerätefunktion und einem zweitem Bereich als Beschriftungsfeld zur verbalen Kennzeichnung dieser Funktion aufweist.

Die DE 202007 005 026 U1 beschreibt den Einbau eines Anzeigegerätes, beispielsweise eines Touchscreen Monitors, in einer Wand- oder Maueröffnung.

Der Erfindung liegt die Aufgabe zugrunde, ein Unterputz-Elektro-Installationsgeräte-Baukastensystem anzugeben, welches eine einfache Möglichkeit zur Schaffung eines Installationsgerätes mit gewünschter Funktion bietet.

Diese Aufgabe wird erfindungsgemäß gelöst durch ein Unterputz-Elektro-Installationsgeräte-Baukastensystem zur Schaffung eines Unterputz-Elektro-Installationsgerätes, umfassend
- eine Bedieneinheit erster Ausführungsform mit einem Gesamt-Touchscreenflächenfeld, welches zumindest in ein erstes Teil-Touchscreenflächenfeld zur Darstellung, Aktivierung und Statusanzeige einer hinterlegten Gerätefunktion und ein zweites Teil-Touchscreenflächenfeld als Beschriftungsfeld zur verbalen Kennzeichnung dieser relevanten Gerätefunktion unterteilt ist, wobei die Ansteuerung des Gesamt-Touchscreenflächenfeldes unter Verwendung einer integrierten Ansteuer-/Verarbeitungs-/Speichereinrichtung erfolgt,
- eine Bedieneinheit zweiter Ausführungsform, bei welcher zusätzlich zur Bedieneinheit erster Ausführungsform eine an die Ansteuer-/Verarbeitungs-/Speichereinrichtung angeschlossene WLAN-Einheit (Wireless Local Area Network) inklusive Funk-Antenne vorgesehen, so dass eine Kommunikation mit einem mobilen Endgerät ermöglicht ist,
- einen Unterputz-Einsatz erster Ausführungsform, welcher ein Netzteil und einen Spannungs- und Verbraucheranschlussblock sowie wahlweise einen Schaltaktor oder Dimmaktor oder Jalousieaktor aufweist,
wobei die elektrische Kontaktierung zwischen einem Unterputz-Einsatz und einer Bedieneinheit erster oder zweiter Ausführungsform über eine einheitliche, standardisierte Schnittstelle erfolgt.

Die mit der Erfindung erzielbaren Vorteile bestehen insbesondere darin, dass einheitliche Bedieneinheiten sowohl für Schaltaktoren (Schalteinsätze) als auch für Dimmaktoren (Dimmeinsätze) als auch für Jalousieaktoren (Jalousieeinsätze) mit einem einheitlichen Grafik-User-Interface geschaffen werden, wobei die Schaltaktoren, Dimmaktoren und Jalousieaktoren jeweils in handelsübliche Unterputz-Gerätedosen installierbar sind.

Des Weiteren kann das Unterputz-Elektro-Installationsgeräte-Baukastensystem zusätzlich einen Unterputz-Einsatz zweiter Ausführungsform mit einem KNX-Einsatz (KONNEX) umfassen, welcher einen Busankoppler inklusive Bus-Anschlusseinheit für den Anschluss an ein Bussystem aufweist, wobei die elektrische Kontaktierung zwischen einem Unterputz-Einsatz und einer Bedieneinheit erster oder zweiter Ausführungsform wiederum über die einheitliche, standardisierte Schnittstelle erfolgt.

Vorzugsweise weist das Gesamt-Touchscreenflächenfeld mindestens ein Teil-Touchscreenflächenfeld zum Aufrufen und zur Darstellung / Bearbeitung / Einstellung von Menüebenen und Untermenüebenen auf, um auf diese Weise eine gewünschte Parametrierung bei einer Erstinbetriebnahme vornehmen zu können.

Die Erfindung wird nachstehend an Hand der in der Zeichnung dargestellten Ausführungsbeispiele erläutert. Es zeigen:
- Fig. 1: ein Unterputz-Elektro-Installationsgerät erster Ausführungsform,
- Fig. 2: ein Unterputz-Elektro-Installationsgerät zweiter Ausführungsform,
- Fig. 3: ein Unterputz-Elektro-Installationsgerät dritter Ausführungsform,
- Fig. 4: ein Unterputz-Elektro-Installationsgerät vierter Ausführungsform,
- Fig. 5: ein erweitert ausgebildetes Gesamt-Touchscreenflächenfeld,
- Fig. 6: ein für Mehrfach-Bedienfunktionen ausgebildetes Gesamt-Touchscreenflächenfeld.

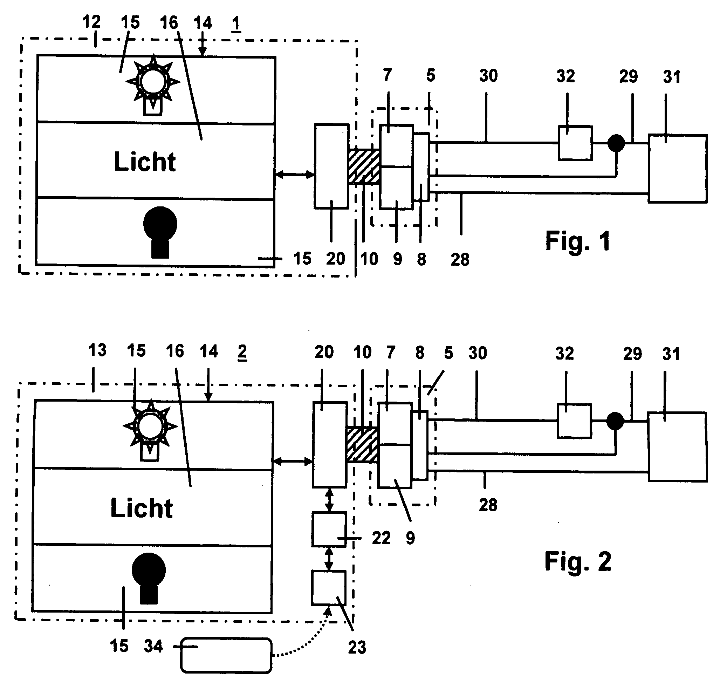

In Fig. 1 ist ein Unterputz-Elektro-Installationsgerät erster Ausführungsform dargestellt. Das gezeigte Unterputz-Elektro-Installationsgerät 1 besteht aus einer Bedieneinheit 12 (Bedienmodul) erster Ausführungsform und einem Unterputz-Einsatz 5 (Unterputz-Gerätesockel) erster Ausführungsform.

Die Bedieneinheit 12 (Bedienmodul) erster Ausführungsform weist ein Gesamt-Touchscreenflächenfeld 14 auf, welches zumindest in ein erstes Teil-Touchscreenflächenfeld 15 zur Darstellung, Aktivierung und Statusanzeige einer hinterlegten Gerätefunktion und ein zweites Teil-Touchscreenflächenfeld 16 als Beschriftungsfeld zur verbalen Kennzeichnung dieser relevanten Gerätefunktion unterteilt ist. Beim gezeigten Ausführungsbeispiel sind zwei erste Teil-Touchscreenflächenfelder 15 und ein zweites Teil-Touchscreenflächenfeld 16 vorgesehen:
- das Berühren des oberen Teil-Touchscreenflächenfeldes 15 führt zum Einschalten einer Beleuchtung,
- das Berühren des unteren Teil-Touchscreenflächenfeldes 15 führt zum Ausschalten dieser Beleuchtung.
Die Ansteuerung des Gesamt-Touchscreenflächenfeldes 14 erfolgt unter Verwendung einer integrierten Ansteuer-/Verarbeitungs-/Speichereinrichtung 20.

Der Unterputz-Einsatz 5 (Unterputz-Gerätesockel) erster Ausführungsform weist ein Netzteil 9 und einen Spannungs- und Verbraucheranschlussblock 8 sowie wahlweise einen Schaltaktor oder Dimmaktor oder Jalousieaktor 7 auf.

Von Wichtigkeit ist eine einheitliche, standardisierte, vorzugsweise in Form einer Steckverbindung ausgestaltete Schnittstelle 10 zwischen dem Unterputz-Einsatz 5 einerseits und der Bedieneinheit 12 andererseits, so dass die Bedieneinheit 12 elektrisch und mechanisch wahlweise mit einem als Schaltaktor oder als Dimmaktor oder als Jalousieaktor 7 ausgestalteten Unterputz-Einsatz 5 verbunden werden kann.

Fig. 1 zeigt ferner die Beschaltung des Unterputz-Elektro-Installationsgerätes 1 über den Spannungs- und Verbraucheranschlussblock 8 mit einem anzusteuernden elektrischen Verbraucher 32, beispielsweise einer Leuchte oder einer Jalousie, um derart die Leute einzuschalten oder auszuschalten oder zu dimmen oder die Jalousie zu schließen oder zu öffnen, wobei die Energieversorgung aus einem 230V-Wechselspannungsnetz 31 erfolgt. An den Spannungs- und Verbraucheranschlussblock 8 sind der Phasenleiter 28, der Nullleiter 29 und die Lastleitung 30 anzuschließen, an den Verbraucher 32 sind die Lastleitung 30 und der Nullleiter 29 anzuschließen.

In Fig. 2 ist ein Unterputz-Elektro-Installationsgerät zweiter Ausführungsform dargestellt. Das gezeigte Unterputz-Elektro-Installationsgerät 2 besteht aus einer Bedieneinheit 13 (Bedienmodul) zweiter Ausführungsform und einem Unterputz-Einsatz 5 (Unterputz-Gerätesockel) erster Ausführungsform.

Die Bedieneinheit 13 (Bedienmodul) zweiter Ausführungsform weist ein Gesamt-Touchscreenflächenfeld 14 auf, welches wiederum zumindest in ein erstes Teil-Touchscreenflächenfeld 15 zur Darstellung, Aktivierung und Statusanzeige einer hinterlegten Gerätefunktion und ein zweites Teil-Touchscreenflächenfeld 16 als Beschriftungsfeld zur verbalen Kennzeichnung dieser relevanten Gerätefunktion unterteilt ist. Beim gezeigten Ausführungsbeispiel sind wiederum zwei erste Teil-Touchscreenflächenfelder 15 und ein zweites Teil-Touchscreenflächenfeld 16 vorgesehen. Die Ansteuerung des Gesamt-Touchscreenflächenfeldes 14 erfolgt unter Verwendung der Ansteuer-/Verarbeitungs-/Speichereinrichtung 20. Zusätzlich zur Bedieneinheit 12 erster Ausführungsform sind eine an die Ansteuer-/Verarbeitungs-/Speichereinrichtung 20 angeschlossene WLAN-Einheit 22 inklusive Funk-Antenne 23 vorgesehen, so dass eine Kommunikation mit einem mobilen Endgerät 34, insbesondere Smartphone / Smartpad / Tablet-PC 34 ermöglicht ist (Wireless Local Area Network, auch "Wi-Fi": Funk-Schnittstelle, Marken-Begriff).

Von Wichtigkeit bei der Bedieneinheit 13 ist wiederum die einheitliche, vorzugsweise in Form einer Steckverbindung ausgestaltete Schnittstelle 10 zwischen dem Unterputz-Einsatz 5 einerseits und der Bedieneinheit 13 andererseits, so dass die Bedieneinheit 13 elektrisch und mechanisch wahlweise mit einem als Schaltaktor oder als Dimmaktor oder als Jalousieaktor 7 ausgestalteten Unterputz-Einsatz 5 verbunden werden kann.

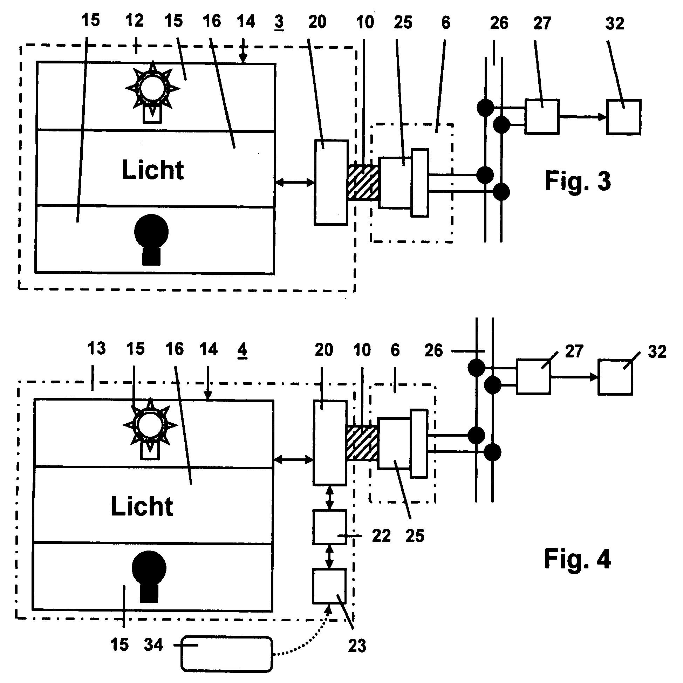

In Fig. 3 ist ein Unterputz-Elektro-Installationsgerät dritter Ausführungsform dargestellt. Das gezeigte Unterputz-Elektro-Installationsgerät 3 besteht aus einer Bedieneinheit 12 (Bedienmodul) erster Ausführungsform und einem Unterputz-Einsatz 6 (Unterputz-Gerätesockel) zweiter Ausführungsform.

Die Bedieneinheit 12 (Bedienmodul) erster Ausführungsform weist wiederum ein Gesamt-Touchscreenflächenfeld 14 auf, welches zumindest in ein erstes Teil-Touch-screenflächenfeld 15 zur Darstellung, Aktivierung und Statusanzeige einer hinterlegten Gerätefunktion und ein zweites Teil-Touchscreenflächenfeld 16 als Beschriftungsfeld zur verbalen Kennzeichnung dieser relevanten Gerätefunktion unterteilt ist. Beim gezeigten Ausführungsbeispiel sind zwei erste Teil-Touchscreenflächenfelder 15 und ein zweites Teil-Touchscreenflächenfeld 16 vorgesehen. Die Ansteuerung des Gesamt-Touchscreenflächenfeld 14 erfolgt unter Verwendung einer Ansteuer-/Verarbeitungs-/Speichereinrichtung 20.

Der Unterputz-Einsatz 6 (Unterputz-Gerätesockel) zweiter Ausführungsform ist als KNX-Einsatz (KONNEX) ausgeführt und weist dementsprechend einen Busankoppler 25 inklusive Bus-Anschlusseinheit für den Anschluss an ein Bussystem 26 auf. Von Wichtigkeit ist wiederum eine einheitliche, standardisierte, vorzugsweise in Form einer Steckverbindung ausgestaltete Schnittstelle 10 zwischen dem Unterputz-Einsatz 6 einerseits und der Bedieneinheit 12 andererseits. Die Versorgung (Energie) und Ansteuerung des Verbrauchers 32 erfolgt über einen an das Bussystem 26 und an eine Energieversorgung (Wechselspannungsnetz) angeschlossenen Aktor 27.

In Fig. 4 ist ein Unterputz-Elektro-Installationsgerät vierter Ausführungsform dargestellt. Das gezeigte Unterputz-Elektro-Installationsgerät 4 besteht aus einer Bedieneinheit 13 (Bedienmodul) zweiter Ausführungsform und einem Unterputz-Einsatz 6 (Unterputz-Gerätesockel) zweiter Ausführungsform.

Die Bedieneinheit 13 (Bedienmodul) zweiter Ausführungsform weist wiederum ein Gesamt-Touchscreenflächenfeld 14 auf, welches wiederum zumindest in ein erstes Teil-Touchscreenflächenfeld 15 zur Darstellung, Aktivierung und Statusanzeige einer hinterlegten Gerätefunktion und ein zweites Teil-Touchscreenflächenfeld 16 als Beschriftungsfeld zur verbalen Kennzeichnung dieser relevanten Gerätefunktion unterteilt ist. Beim gezeigten Ausführungsbeispiel sind wiederum zwei erste Teil-Touchscreenflächenfelder 15 und ein zweites Teil-Touchscreenflächenfeld 16 vorgesehen. Die Ansteuerung des Gesamt-Touchscreenflächenfeldes 14 erfolgt unter Verwendung der Ansteuer-/Verarbeitungs-/Speichereinrichtung 20. Zusätzlich zur Bedieneinheit 12 erster Ausführungsform sind eine an die Ansteuer-Nerarbeitungs-/Speichereinrichtung 20 angeschlossene WLAN-Einheit 22 inklusive Funk-Antenne 23 vorgesehen, so dass eine Kommunikation mit einem mobilen Endgerät 34, insbesondere Smartphone / Smartpad / Tablet-PC 34 ermöglicht ist (Wireless Local Area Network, auch "Wi-Fi": Funk-Schnittstelle, Marken-Begriff).

Der Unterputz-Einsatz 6 (Unterputz-Gerätesockel) zweiter Ausführungsform weist wiederum einen Busankoppler 25 inklusive Bus-Anschlusseinheit für den Anschluss an ein Bussystem 26 auf. Von Wichtigkeit ist wiederum eine einheitliche, standardisierte, vorzugsweise in Form einer Steckverbindung ausgestaltete Schnittstelle 10 zwischen dem Unterputz-Einsatz 6 einerseits und der Bedieneinheit 12 andererseits. Die Versorgung (Energie) und Ansteuerung des Verbrauchers 32 erfolgt über einen an das Bussystem 26 und an eine Energieversorgung (Wechselspannungsnetz) angeschlossenen Aktor 27.

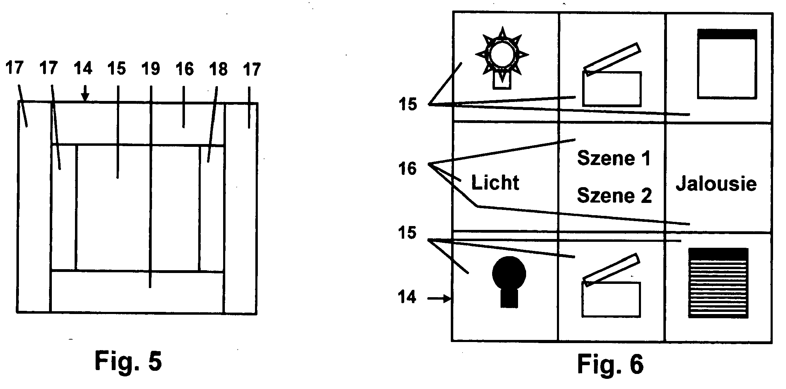

In Fig. 5 ist ein erweitert ausgebildetes Gesamt-Touchscreenflächenfeld dargestellt. Außer dem ersten Teil-Touchscreenflächenfeld 15 zur Darstellung, Aktivierung und Statusanzeige einer hinterlegten Gerätefunktion und dem zweiten Teil-Touchscreenflächenfeld 16 als Beschriftungsfeld zur Kennzeichnung dieser relevanten Gerätefunktion weist das Gesamt-Touchscreenflächenfeld 14 auf:
- mehrere weitere Teil-Touchscreenflächenfelder 17 zur Betätigung einer hinterlegten Gerätefunktion,
- mindestens ein Teil-Touchscreenflächenfeld 18 zur Darstellung einer untergeordneten Bedienfunktion,
- mindestens ein Teil-Touchscreenflächenfeld 19 zum Aufrufen und zur Darstellung / Bearbeitung / Einstellung von Menüebenen und Untermenüebenen, um auf diese Weise eine gewünschte Parametrierung bei der Erstinbetriebnahme vornehmen zu können.

In Fig. 6 ist ein für Mehrfach-Bedienfunktionen ausgebildetes Gesamt-Touchscreenflächenfeld dargestellt. Bei dieser Ausführungsform ist das Gesamt-Touchscreenflächenfeld 14 matrixförmig mit drei Zeilen und drei Spalten in insgesamt neun Teil-Touchscreenflächenfelder unterteilt, wobei
- die mittlere Zeile drei Teil-Touchscreenflächenfelder 16 als Beschriftungsfeld zur Kennzeichnung dieser relevanten Gerätefunktion,
- die obere und die untere Zeile jeweils drei Teil-Touchscreenflächenfelder 15 zur Darstellung, Aktivierung und Statusanzeige einer hinterlegten Gerätefunktion beinhalten.

Die linke Spalte des Gesamt-Touchscreenflächenfeldes 14 dient zum Einschalten / Ausschalten einer Beleuchtung (Berühren des oberen Feldes: Einschalten, Berühren des unteren Feldes: Ausschalten), die mittlere Spalte dient zur Vorwahl einer definierten Lichtszene, mit welcher die Beleuchtung eingeschaltet / ausgeschaltet werden soll (Berühren des oberen Feldes: Auswahl von "Szene 1", Berühren des unteren Feldes: Auswahl von "Szene 2") und die rechte Spalte dient zum Öffnen / Schließen einer Jalousie (Berühren des oberen Feldes: Öffnen, Berühren des unteren Feldes: Schließen).

Allgemein gilt für die beschriebenen Unterputz-Installationsgeräte 1, 2, 3, 4:
- Die Bedieneinheit 12, 13 stellt die Gerätefunktion an Hand des Unterputz-Einsatzes 5, 6 zur Verfügung. Sollen mehrere Gerätefunktionen zur Auswahl stehen, erfolgt eine entsprechende Parametrierung über die Erstinbetriebnahme. Änderungen und Anpassungen sind auch zu späteren Zeitpunkten möglich. Jeder Gerätefunktion und jedem Grafik-User-Interface sind feste Symbole / ICONs zugeordnet.
- Die Bedieneinheiten 13 mit WLAN-Einheit (Wi-Fi) bringen fest eingestellte Gerätefunktionen in Verbindung mit dem jeweiligen Unterputz-Einsatz mit. Gerätefunktionserweiterungen, wie beispielsweise die Erweiterung einer 1-fach Bedieneinheit zu einer n-fach Bedieneinheit können bei diesen Bedieneinheiten 13 über Inbetriebnahme-Applikationen mit Hilfe eines mobilen Endgerätes 34 vorgenommen werden. Nach der Parametrierung durch die Applikation übernimmt das Unterputz-Installationsgerät 2, 4 die gleichen vorgegebenen Gerätefunktionen in seiner Bedieneinheit. Somit stehen dem Nutzer die Gerätefunktionen stationär am Unterputz-Installationsgerät 2, 4 zur Verfügung. Über die Inbetriebnahme-Applikationen erfolgt auch die Beschriftung des Beschriftungsfeldes der Bedieneinheit 13 mit dem gewünschten Text - siehe das zweite Teil-Touchscreenflächenfeld 16 - sowie die Vorgabe eines gewünschten Symbols / ICONs - siehe das erste Teil-Touchscreenflächenfeld 15. Des Weiteren stehen Gerätefunktionen als Bedien-Applikationen für das jeweilige mobile Endgerät 34 zur Verfügung. Somit kann das mobile Endgerät 34 als Fernbedienung der Gerätefunktionen dienen. Über die Applikation ist es möglich, die Gerätefunktionen raumweise zuzuordnen.
- Die KNX-Funktionalität beim Unterputz-Einsatz 6 steht über eine Parametrierungssoftware über das Bussystem 26 zur Verfügung. Jeder Gerätefunktion und jedem Grafik-User-Interface stehen ICON-Bibliotheken / Symbol-Bibliotheken über die Inbetriebnahme-Software des Bussystems 26 zur Verfügung. Die Bedieneinheiten 13 mit WLAN-Einheit (Wi-Fi) dienen nebenbei als Fernbedienung der Gerätefunktionen über die entsprechenden Applikationen.

Mit dem vorgeschlagenen beschriebenen Unterputz-Elektro-Installationsgeräte-Baukastensystem können beispielsweise die folgenden Elektro-Installationsgeräte mit unterschiedlichen Funktionen geschaffen werden:
- 1fach oder 2fach oder 3fach oder 4fach oder 5fach oder 6fach-Schalter zum Einschalten / Ausschalten einer / mehrerer Beleuchtung(en),
- Wochenschaltuhr / Timer mit mehreren einstellbaren Schaltzeiten pro Tag,
- Wecker mit mehreren einstellbaren Weckzeiten,
- Raumtemperaturregler (Heizen oder Kühlen) über das Bussystem 26,
- Ansteuerung / Schalter für eine Treppenhausbeleuchtung mit vorgebbarer Einschaltverzögerung und Ausschaltverzögerung,
- 1 fach oder 2fach oder 3fach oder 4fach oder 5fach oder 6fach-Dimmer zum Dimmen einer / mehrerer Beleuchtung(en) mit vorgebbarer Dimmgeschwindigkeit und optional mit Vorgabe von einer oder mehreren gewünschten Lichtszene(n),
- 1fach oder 2fach oder 3fach oder 4fach oder 5fach oder 6fach-Schalter zum Öffnen / Schließen einer / mehrerer Jalousie(n),
- Anzeigegerät zur Darstellung von Energieverbrauchsverläufen über einen interessierenden Zeitraum (Tag, Woche),
- Radio-Ansteuerung über das Bussystem 26,
- Multimedia-Ansteuerung über das Bussystem 26,
- Anzeigegerät für Fremd-Applikationen über das mobile Endgerät 34.

### Bezugszeichenliste

- 1: Unterputz-Elektro-Installationsgerät erster Ausführungsform
- 2: Unterputz-Elektro-Installationsgerät zweiter Ausführungsform
- 3: Unterputz-Elektro-Installationsgerät dritter Ausführungsform
- 4: Unterputz-Elektro-Installationsgerät vierter Ausführungsform
- 5: Unterputz-Einsatz (Unterputz-Gerätesockel) erster Ausführungsform
- 6: Unterputz-Einsatz (Unterputz-Gerätesockel) zweiter Ausführungsform
- 7: Schaltaktor oder Dimmaktor oder Jalousieaktor
- 8: Spannungs- und Verbraucheranschlussblock
- 9: Netzteil
- 10: einheitliche, standardisierte Schnittstelle (Steckverbindung) zwischen Unterputz-Einsatz und Bedieneinheit
- 11: -
- 12: Bedieneinheit (Bedienmodul) erster Ausführungsform
- 13: Bedieneinheit (Bedienmodul) zweiter Ausführungsform
- 14: Gesamt-Touchscreenflächenfeld
- 15: erstes Teil-Touchscreenflächenfeld zur Darstellung, Aktivierung und Statusanzeige einer hinterlegten Gerätefunktion
- 16: zweites Teil-Touchscreenflächenfeld als Beschriftungsfeld zur Kennzeichnung der relevanten Gerätefunktion
- 17: weiteres Teil-Touchscreenflächenfeld zur Betätigung einer Gerätefunktion
- 18: weiteres Teil-Touchscreenflächenfeld zur Darstellung einer untergeordneten Bedienfunktion
- 19: weiteres Teil-Touchscreenflächenfeld zum Aufrufen und zur Darstellung-einer Untermenüebene
- 20: Ansteuer-/Verarbeitungs-/Speichereinrichtung
- 21: -
- 22: WLAN-Einheit
- 23: Funk-Antenne
- 24: -
- 25: Busankoppler inklusive Bus-Anschlusseinheit
- 26: Bussystem
- 27: Aktor
- 28: Phasenleiter eines 230V-Wechselspannungsnetzes
- 29: Nulleiter
- 30: Lastleitung zum Verbraucher
- 31: 230V-Wechselspannungsnetz
- 32: anzusteuernder elektrischer Verbraucher (Leuchte, Jalousie)
- 33: -
- 34: mobiles Endgerät: Smartphone / Smartpad / Tablet-PC

## Patentansprüche

1. Unterputz-Elektro-Installationsgeräte-Baukastensystem zur Schaffung eines Unterputz-Elektro-Installationsgerätes (1, 2, 3, 4), umfassend
• eine Bedieneinheit (12) erster Ausführungsform mit einem Gesamt-Touchscreenflächenfeld (14), welches zumindest in ein erstes Teil-Touchscreenflächenfeld (15) zur Darstellung, Aktivierung und Statusanzeige einer hinterlegten Gerätefunktion und ein zweites Teil-Touchscreenflächenfeld (16) als Beschriftungsfeld zur verbalen Kennzeichnung dieser relevanten Gerätefunktion unterteilt ist, wobei die Ansteuerung des Gesamt-Touchscreenflächenfeldes (14) unter Verwendung einer integrierten Ansteuer-/Verarbeitungs-/Speichereinrichtung (20) erfolgt,
• eine Bedieneinheit (13) zweiter Ausführungsform, bei welcher zusätzlich zur Bedieneinheit (12) erster Ausführungsform eine an die Ansteuer-/Verarbeitungs-/Speichereinrichtung (20) angeschlossene WLAN-Einheit (22), Wireless Local Area Network, inklusive Funk-Antenne (23) vorgesehen ist, so dass eine Kommunikation mit einem mobilen Endgerät (34) ermöglicht ist,
**dadurch gekennzeichnet, dass**
• ein Unterputz-Einsatz (5) erster Ausführungsform, welcher ein Netzteil (9) und einen Spannungs- und Verbraucheranschlussblock (8) sowie wahlweise einen Schaltaktor oder Dimmaktor oder Jalousieaktor (7) aufweist, vorgesehen ist, wobei die elektrische Kontaktierung zwischen einem Unterputz-Einsatz (5) und einer Bedieneinheit (12, 13) erster oder zweiter Ausführungsform über eine einheitliche, standardisierte Schnittstelle (10) erfolgt und die Bedieneinheiten, für Schaltaktoren, Dimmaktoren und Jalousieaktoren mit einem einheitlichen Grafik-User-Interface geschaffen werden.

2. Unterputz-Elektro-Installationsgeräte-Baukastensystem nach Anspruch 1, **dadurch gekennzeichnet, dass** es zusätzlich einen Unterputz-Einsatz (6) zweiter Ausführungsform mit einem KNX-Einsatz, KONNEX, umfasst, welcher einen Busankoppler (25) inklusive Bus-Anschlusseinheit für den Anschluss an ein Bussystem (26) aufweist, wobei die elektrische Kontaktierung zwischen einem Unterputz-Einsatz (6) und einer Bedieneinheit (12, 13) erster oder zweiter Ausführungsform wiederum über die einheitliche, standardisierte Schnittstelle (10) erfolgt.

3. Unterputz-Elektro-Installationsgeräte-Baukastensystem nach Anspruch 1, **dadurch gekennzeichnet, dass** das Gesamt-Touchscreenflächenfeld (14) mindestens ein Teil-Touchscreenflächenfeld (19) zum Aufrufen und zur Darstellung / Bearbeitung / Einstellung von Menüebenen und Untermenüebenen aufweist, um auf diese Weise eine gewünschte Parametrierung bei einer Erstinbetriebnahme vornehmen zu können.

## Claims

1. Flush-mounted electrical installation device modular system for creating a flush-mounted electrical installation device (1, 2, 3, 4), comprising
· an operator control unit (12) of a first embodiment with an overall touchscreen interface area (14) which is subdivided at least into a first partial touchscreen interface area (15) for displaying, activating and indicating the status of a stored device function and a second partial touchscreen interface area (16) in the form of a labelling area for verbally identifying this relevant device function, wherein the overall touchscreen interface area (14) is actuated using an integrated actuating/processing/storage device (20),
· an operator control unit (13) of a second embodiment in which, in addition to the operator control unit (12) of a first embodiment, a WLAN unit (22), Wireless Local Area Network, which includes a radio antenna (23) and is connected to the actuating/processing/storage device (20) is provided, so that communication with a mobile terminal device (34) is possible,
**characterized in that**
· a flush-mounted insert (5) of a first embodiment which has a power supply unit (9) and a voltage and load connection block (8) and also selectively a switching actuator or dimming actuator or shutter actuator (7) is provided, wherein the electrical contact-connection between a flush-mounted insert (5) and an operator control unit (12, 13) of a first or second embodiment is made by means of a uniform, standardized interface (10) and the operator control units for switching actuators, dimming actuators and shutter actuators with a uniform graphical user interface are created.

2. Flush-mounted electrical installation device modular system according to Claim 1, **characterized in that** it additionally comprises a flush-mounted insert (6) of a second embodiment having a KNX, KONNEX, which has a bus coupler (25) which includes a bus connection unit for connection to a bus system (26), wherein the electrical contact-connection between a flush-mounted insert (6) and an operator control unit (12, 13) of a first or second embodiment is once again made by means of the uniform, standardized interface (10).

3. Flush-mounted electrical installation device modular system according to Claim 1, **characterized in that** the overall touchscreen interface area (14) has at least one partial touchscreen interface area (19) for calling up and for displaying/editing/setting menu levels and submenu levels in order to be able to perform a desired parameterization operation on initial start-up in this way.

## Revendications

1. Système modulaire d'appareillages d'installation électrique à encastrer destiné à produire un appareillage d'installation électrique à encastrer (1, 2, 3, 4), comprenant
* une unité de commande (12) d'une première forme de réalisation dotée d'un champ plat à écran tactile commun (14), lequel est divisé en au moins un premier champ plat à écran tactile partiel (15) servant à représenter, activer et indiquer l'état d'une fonction d'appareil mise en mémoire et un deuxième champ plat à écran tactile partiel (16) sous la forme d'un champ de marquage servant à l'identification verbale de cette fonction d'appareil pertinente, l'excitation du champ plat à écran tactile commun (14) s'effectuant en utilisant un dispositif intégré d'excitation/traitement/mémorisation (20),
* une unité de commande (13) d'une deuxième forme de réalisation, avec laquelle, en plus de l'unité de commande (12) d'une première forme de réalisation, il est prévu une unité WLAN (22), Wireless Local Area Network - Réseau local sans fil, y compris une antenne radioélectrique (23), raccordée au dispositif d'excitation/traitement/mémorisation (20), de sorte qu'une communication avec un terminal mobile (34) soit possible,
caractérisé en ce
* qu'il existe un insert à encastrer (5) d'une première forme de réalisation, lequel possède un adaptateur secteur (9) et un bloc de raccordement de tension et de consommateur (8) ainsi que, au choix, un actionneur de commutation ou un actionneur de gradation ou un actionneur de store (7), la mise en contact électrique entre un insert à encastrer (5) et une unité de commande (12, 13) de la première ou la deuxième forme de réalisation s'effectuant par le biais d'une interface (10) uniforme normalisée et les unités de commande pour les actionneurs de commutation, actionneurs de gradation et actionneurs de store étant produites avec une interface utilisateur graphique uniforme.

2. Système modulaire d'appareillages d'installation électrique à encastrer selon la revendication 1, **caractérisé en ce qu'**il comprend en outre un insert à encastrer (6) d'une deuxième forme de réalisation doté d'un insert KNX, KONNEX, qui possède un coupleur de bus (25) avec unité de connexion de bus pour le raccordement à un système de bus (26), la mise en contact électrique entre un insert à encastrer (6) et une unité de commande (12, 13) de la première ou la deuxième forme de réalisation s'effectuant là aussi par le biais de l'interface (10) uniforme normalisée.

3. Système modulaire d'appareillages d'installation électrique à encastrer selon la revendication 1, **caractérisé en ce que** le champ plat à écran tactile commun (14) possède au moins un champ plat à écran tactile partiel (19) destiné à invoquer et à représenter/éditer/régler des niveaux de menu et des niveaux de sous-menu afin de pouvoir ainsi effectuer un paramétrage souhaité lors d'une première mise en service.
